# EUROPÄISCHE PATENTSCHRIFT

(11) **EP 2 851 404 B1**
(45) Veröffentlichungstag und Bekanntmachung des Hinweises auf die Patenterteilung: **13.12.2017**
(21) Anmeldenummer: 14185119.6
(22) Anmeldetag: 17.09.2014
(51) Int. Cl.: C09D 183/04, C09J 7/02

(54) **Trennbeschichtung mit definierter Oberflächenstruktur**
Release coating with defined surface structure
Revêtement anti-adhésif dotée d'une structure de surface définie

(30) Priorität: 20.09.2013 DE 102013218985
(43) Veröffentlichungstag der Anmeldung: 25.03.2015
(73) Patentinhaber: tesa SE, 22848 Norderstedt (DE)
(72) Erfinder: Böcker, Dr. Patrick, 49506 Grand Rapids (US); Aguilar Carazas, Robert Christian, 20357 Hamburg (DE); Zeysing, Björn, Dr., 22393 Hamurg (DE)

(56) Entgegenhaltungen:
- WO-A1-90/07560
- WO-A1-2005/052082
- WO-A1-2008/030695
- WO-A1-2009/131792
- DE-A1-102007 010 093

## Beschreibung

Die Erfindung betrifft eine Trennbeschichtung mit einer definierten Oberflächenstruktur. Spezieller betrifft die Erfindung eine auf einem Trägermaterial aufgebrachte Trennbeschichtung, die auf einer vernetzten Silikonbeschichtung basiert und mindestens eine Vertiefung aufweist, die sich durch lokal begrenzte Depolymerisation des Silikons ausbildet. Ferner werden das Verfahren zur Herstellung der Struktur und die Verwendung der Trennbeschichtung offenbart.

Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Haftklebemassen miteinander in Kontakt kommen, oder um bei einseitig klebenden Klebebändern ein leichteres Abrollen zu gewährleisten, wird die Klebmasse vor dem Wickeln des Klebebandes mit einem Abdeckmaterial (auch als Trennmaterial bezeichnet) bedeckt. Dem Fachmann sind derartige Abdeckmaterialien unter den Namen Releaseliner oder Liner bekannt. Neben der Abdeckung von ein- oder doppelseitig klebenden Klebebändern werden Liner auch zur Eindeckung von Etiketten eingesetzt.
Diese Releaseliner sorgen des Weiteren dafür, dass die Klebemasse vor der Anwendung nicht verschmutzt wird. Zusätzlich können Releaseliner über die Art und Zusammensetzung der Releasematerialien so eingestellt werden, dass das Klebeband mit der gewünschten Kraft (leicht oder schwer) abgerollt werden kann. Bei beidseitig mit Klebmasse beschichteten Klebebändern sorgen die Releaseliner zusätzlich dafür, dass beim Abrollen die richtige Seite der Klebemasse zuerst freigelegt wird.

Ein Liner oder Releaseliner (Trennmaterial, Trennpapier, Trennfolie) ist kein fester Bestandteil eines Klebebandes oder Etiketts, sondern in der Regel nur ein Hilfsmittel zu deren Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Abhäsive Beschichtungsmassen werden in großem Umfang zur Herstellung von Linern in der Beschichtung, insbesondere von flächigen Materialien, wie Papieren oder Folien, verwendet, um die Adhäsionsneigung von adhärierenden Produkten gegenüber diesen Oberflächen zu verringern. Wird ein doppelseitig klebendes, mit einem Liner ausgerüstetes Klebeband abgerollt, wird es normalerweise mit der offenen, also linerfreien Haftklebemassenseite auf einen Untergrund aufgeklebt. Die andere Haftklebemassenseite haftet währenddessen auf der beschichteten Oberfläche des Liners noch in genügendem Maße, um die Handhabung des Klebebands zu ermöglichen.
Allerdings muss der Liner vom Klebeband abziehbar sein. Durch den Liner selbst oder durch das Abziehen des Liners darf die Klebkraft der Haftklebemasse nicht wesentlich für die spätere Verwendung beeinträchtigt werden. Gleichzeitig ist die Stabilität der antiadhäsiven Beschichtung (auch als Trennbeschichtung bezeichnet) auf dem Liner, also die Abhäsivität, über lange Zeiträume wichtig, um die Funktion dieser Beschichtung sowie die Eigenschaften der mit dem Liner eingedeckten Haftklebemasse zu gewährleisten.

Eine Trennbeschichtung kann darüber hinaus auch auf der Rückseite - also der nicht mit Klebmasse beschichteten Seite - des Trägers eines Klebebandes aufgebracht sein. In diesem Fall kann auf einen separaten Liner verzichtet werden.

Als Trennbeschichtung werden häufig vernetzbare Silikonsysteme eingesetzt. Dazu zählen Mischungen aus Vernetzungskatalysatoren und so genannten thermisch härtbaren kondensations- oder additionsvernetzenden Polyorganosiloxanen. Für kondensationsvernetzende Silikonsysteme sind als Vernetzungskatalysatoren häufig Zinnverbindungen, wie Dibutylzinndiacetat, in der Masse zugegen.

Silikonbasierende Trennbeschichtungen auf additionsvernetzender Basis lassen sich durch Hydrosilylierung härten. Diese Trennsysteme umfassen üblicherweise die folgenden Bestandteile: ein alkenyliertes Polydiorganosiloxan (insbesondere lineare Polymere mit endständigen Alkenylgruppen), ein Polyorganowasserstoffsiloxan-Vernetzungsmittel sowie einen Hydrosilylierungskatalysator. Typische Katalysatoren für additionsvernetzende Silikonsysteme sind Platin oder Platinverbindungen, wie zum Beispiel der Karstedt-Katalysator [eine Pt(0)-Komplexverbindung].

Als Releaseliner werden industriell Papier- oder Folienträger verwendet, die mit einer abhäsiven Beschichtungsmasse (auch als dehäsive oder anti-adhäsive Masse bezeichnet) ausgerüstet werden, um die Adhäsionsneigung von adhärierenden Produkten gegenüber diesen Oberflächen zu verringern (trennwirksame Funktion). Als derartige Massen, die auch Releasematerial genannt werden, können eine Vielzahl verschiedener Stoffe eingesetzt werden, von denen vorstehend die Silikone bereits genannt wurden.

Darüber hinaus gibt es eine Reihe von beidseitig mit Klebmasse beschichteten Klebebändern, die zunächst mit einem im Produkt enthaltenen Releaseliner abgerollt und appliziert werden, so dass die zweite Klebmasse noch abdeckt ist.

Es ist bekannt, die äußere Oberfläche der Releaseliner, die mit der Haftklebemasse kaschiert wird, zu strukturieren. Alle bekannten Maßnahmen zur Strukturierung weisen jedoch bestimmte Nachteile auf, weil sie keine Herstellung einphasiger Beschichtungen erlauben und neue Grenzflächen in den Releaseliner eingebracht werden oder andererseits hinsichtlich der dreidimensionalen Gestaltungsfreiheit der Oberfläche sowie der Größe der Strukturen stark begrenzt sind. Beispielsweise ist bei einer Extrusion nur die Ausbildung einer lammellenartigen Struktur möglich. Die vorgenannten Beschichtungen zeigen keine homogenen Eigenschaften und können an den Grenzflächen aufbrechen.

Die US 2006/0127626 A1 offenbart ein Trägermaterial zur Verwendung in Haftklebebändern mit zwei gegenüberliegenden Oberflächen und einem auf einer der beiden Oberflächen aufgebrachten Material, das eine flächendeckende Struktur auf der Oberfläche bildet und optional zur Härtung nachbehandelt wird. Durch die Aufbringung eines weiteren Materials wird eine weitere Grenzfläche erzeugt.

US 2008/0078500 A1 beschreibt mittels Extrusion durch ein Formwerkzeug hergestellte, profilierte Releaseliner. Die Profile weisen eine maximale Höhe von 100 µm auf. Alternativ kann der profilierte Releaseliner durch Extrusion auf ein bestehendes Substrat hergestellt werden.

US 2008/0233356 A1 offenbart ein Beschichtungsverfahren basierend auf der Auftragung einer polymeren, nicht-Newtonschen Flüssigkeit mit Bingham Fluss oder Herschel-Bulkeley-Eigenschaften τ0 >10 dyn/cm2. Dies ist nur durch den Zusatz von Additiven möglich, die in den offenbarten Beispielen auch das Trennverhalten des Silikons beeinflussen. Der Zusatz von Additiven bedeutet, dass migrationsfähige Zusätze in die Beschichtung eingetragen werden und zu einem nachteiligen Verhalten der Klebebänder führen können.

Die WO 2011/139573 A2 betrifft die Herstellung lamellenartig strukturierter katalysatorfreier Silikonbeschichtungen, die zunächst durch Inkontaktbringen mit einer Negativform eine strukturierte Oberfläche erhalten und anschließend Elektronenstrahl-vernetzt werden.

WO 90/07560 A1 beschreibt einen Releaseartikel, der ein Filmsubstrat mit einem darauf aufgebrachten Trennmittel umfasst, wobei das Trennmittel ein definiertes geometrisches Muster aus diskreten Inseln und Stegen bildet.

WO 2009/131792 A1 beschreibt einen Klebartikel mit einem Releaseliner, welcher eine mikrostrukturierte Trennschicht umfasst, die im Kontakt mit einer Oberfläche der Klebmasse steht. Die unstrukturierte Trennschicht weist einen Reibungskoeffizienten von mindestens 0,4 auf.

WO 2008/030695 A1 hat ein Verfahren zur Herstellung eines strukturierten Releaseliners zum Gegenstand, das folgende Schritte umfasst:
- Bereitstellen einer Basis und eines Grate bildenden Materials;
- Beschichten des Basis mit dem Grate bildenden Material;
- Formen mindestens eines Grates aus dem Grate bildenden Material unter Benutzung eines profilierten Rakels; und
- Härten des Grate bildenden Materials.

Gegenstand von DE 10 2007 010 093 A1 ist ein Verfahren zur Herstellung von Klebstoffschichten mit definierter Oberflächenstruktur durch Beschichten von Klebstoff auf einen mit einer Antihaftschicht ausgerüsteten Träger, wobei die Antihaftschicht Löcher aufweist und der beschichtete Klebstoff an diesen Löchern direkten Kontakt mit dem Träger hat.

WO 2005/052082 A1 beschreibt einen strukturierten Papier-Releaseliner, der keine strukturelle Trägerschicht enthält und eine Papierlage mit einer Trennseite umfasst, die eine strukturierte Trennoberfläche mit einem in die Papierlage geprägten Muster auf der Trennseite aufweist. Auf die strukturierte Trennoberfläche ist ein trennwirksames Material aufgebracht. Das in die Papierlage geprägte Muster erzeugt in einer auf dem Releaseliner aufliegenden Haftklebmasse Kanäle, durch die ein Fluid aus der von dieser mit einem Substrat gebildeten Verklebungsgrenzfläche entweichen kann.

Aufgabe der vorliegenden Erfindung war die Herstellung von Trennschichten mit strukturierten Oberflächen, insbesondere mit definierten strukturierten Oberflächen, ohne eine Verwendung von profilierten Extruderwerkzeugen. Vorzugsweise sollte eine Silikonbeschichtung als Trennschicht mit einer durchgängigen Phase hergestellt werden, um die Erzeugung von ungewollten Fehlstellen in Grenzschichten zu vermeiden. Unter einer Silikonbeschichtung mit einer durchgängigen Phase wird eine Silikonbeschichtung verstanden, die nicht aus einer unteren Schicht und einer aufgedruckten Schicht besteht, sondern eine durchgängig vernetze Silikonbeschichtung ist. Ferner sollte das Verfahren mit üblichen Trägern und den üblichen Silikonsystemen durchführbar sein, ohne diesen Additive, die im Produkt verbleiben, zuzusetzen. Eine weitere Aufgabe der Erfindung war es, ein Verfahren aufzufinden, dass eine wirtschaftliche, reproduzierbare und möglichst auf einer kontinuierlich laufenden Anlage durchführbare Strukturierung von Releaselinern ermöglicht, wobei die Strukturierung der Oberfläche der Trennschicht reproduzierbar und zugleich leicht variierbar hergestellt werden können sollte, vorzugsweise ohne weitere Grenzflächen in die Trennschicht einzubringen und vorzugsweise ohne eine aufwendige Herstellung neuer Extruderdüsen. Zugleich sollte das Verfahren die Herstellung von dreidimensionalen Strukturen oder Topographien der Oberfläche erlauben, die nicht auf lamellare bzw. profilierte Strukturen beschränkt sind, sondern quasi jede dreidimensionale Struktur umfassen, wie beispielsweise rotationssymmetrische und/oder sinusförmige Topographien oder gitterartige Strukturen. Des Weiteren bestand die Aufgabe, ein Verfahren zu entwickeln, dass die Herstellung von Trennschichten mit strukturierten Oberflächen auch nach einer Herstellung und Vernetzung der Trennbeschichtungen erlaubt.

Gelöst wird diese Aufgabe durch eine Trennbeschichtung, wie sie im Hauptanspruch niedergelegt ist. Gegenstand der Unteransprüche sind vorteilhafte Fortbildungen des Erfindungsgegenstandes. Weitere vorteilhafte Ausgestaltungen werden in der Beschreibung detailliert beschrieben. Des Weiteren umfasst die Erfindung ein Verfahren zur Herstellung als auch die Verwendung der Trennbeschichtung.

Gegenstand der Erfindung ist eine auf einem Trägermaterial aufgebrachte Trennbeschichtung, die eine vernetzte Silikonbeschichtung ist und auf der dem Trägermaterial abgewandten Oberfläche mindestens eine Vertiefung aufweist und die dadurch gekennzeichnet ist, dass die in dieser Oberfläche enthaltenen Vertiefungen jeweils unabhängig voneinander eine Geometrie aufweisen, die sich durch eine lokale Depolymerisation des Silikons bildet, und dass jeweils unabhängig die Ebene der Öffnung einer Vertiefung innerhalb der Oberfläche einen Durchmesser von 0,001 µm bis zur kompletten Breite der Silikonbeschichtung und/oder die Vertiefung eine Tiefe von 0,001 µm bis 10 µm aufweist.

Die erfindungsgemäß depolymerisierbaren Silikonbeschichtungen sind nicht auf additionsvernetzende Polyorganosiloxane beschränkt, sondern können auch Polyorganosiloxane umfassen, die photopolymerisiert wurden, wie es in der EP 0 168 713 B1, DE 38 20 294 C1 oder US 4,725,630 A1 für u.a. (Meth)acrylat- oder Mercaptosubstituierte Polysiloxane offenbart wird. Ebenfalls können Epoxy-Gruppen-substituierte Polysiloxane - wie in DE 33 16 166 C1 offenbart -, die Säure-katalysiert vernetzt werden, später wieder definiert an lokalen Positionen depolymerisiert werden. Über Kondensationsreaktionen vernetzte Silikone können ebenfalls gezielt und lokal begrenzt depolymerisiert werden. Die wichtigste Gruppe an Polyorganosiloxanen zur Herstellung von Silikonbeschichtungen sind jedoch die additionsvernetzenden Polyorganosiloxane, wie sie nachstehend eingehend erläutert werden.

Besonders bevorzugt ist daher die erfindungsgemäße Trennbeschichtung eine vernetzte Silikonbeschichtung basierend auf in Gegenwart von Hydrosilylierungskatalysatoren additionsvernetzten Polyorganosiloxanen.

Bei einem zweiseitig mit einer Trennbeschichtung versehenen Releaseliner können beide Silikonschichten an lokal definierten Positionen strukturiert sein. Die erfindungsgemäßen Trennbeschichtungen weisen bevorzugt eine chemische Prägung auf. Eine Trennbeschichtung ist ein Flächenelement mit zwei sich gegenüberliegenden Grenzflächen, einer ersten und einer zweiten Grenzfläche. In einem Releaseliner ist die zweite Grenzfläche dem Trägermaterial zugewandt, und die erste Grenzfläche ist dem Trägermaterial abgewandt.

Die vorgenannten Hydrosilylierungskatalysatoren umfassen zum Beispiel Ruthenium, Rhodium, Palladium, Osmium, Indium oder insbesondere Platin, deren Komplexe und Verbindungen und/oder Katalysatorsysteme aus mehreren dieser Katalysatoren. Besonders bevorzugte Hydrosilylierungskatalysatoren umfassen Platin, eine Platin-Komplexverbindung oder eine Platinverbindung wie den Karstedt-Katalysator (aus der Umsetzung von Hexachloridoplatinsäure in einem inerten Lösemittel mit Tetramethyl-1,3-divinyldisiloxan).

Die erfindungsgemäße Trennbeschichtung ist vorzugsweise eine additionsvernetzte Silikonbeschichtung, wobei die additionsvernetzbaren Silikone ausgewählt sind aus der Gruppe Silikone, fluorierte Silikone, Silikon-Copolymere und Mischungen aus zwei oder mehreren der genannten Silikone sowie Silikon-Blends mit anderen Stoffen. Die Trennbeschichtung kann ferner mindestens einen Hydrosilylierungskatalysator sowie optional verbrauchte oder inhibierte Hydrosilylierungskatalysatoren umfassen.

Bekannte Verfahren aus dem Stand der Technik beruhten bislang auf einer mechanischen Strukturierung oder dem zusätzlichen Aufdrucken einer weiteren Schicht. Mit der erfindungsgemäßen Trennbeschichtung gelingt es, eine Strukturierung oder Topographie der Silikonschicht nach der Vernetzung des Silikons chemisch herzustellen, zu übertragen und/oder zu fixieren.
Gegenstand der Erfindung ist somit eine Trennbeschichtung, deren erste Oberfläche eine Topographie oder Strukturierung aufweist, die sich durch definierte lokale Depolymerisation, gefolgt von der Entfernung der flüssigen Depolymerisationsprodukte der Polysiloxane bildet.

Die erfindungsgemäß bevorzugten Silikonbeschichtungen auf Basis von additionsvernetzenden Polysiloxanen sowie Hydrosilylierungskatalysatoren können vor, während oder nach einer Additionsvernetzung mit einem Depolymerisationsmittel behandelt werden. Vorzugsweise werden die Depolymerisationsmittel auf der ersten Grenzfläche - der vom Träger abgewandte Seite der Silikonschicht - an definierten Positionen aufgetragen. Die Auftragung erfolgt erfindungsgemäß bevorzugt auf bereits additionsvernetzte Silikonschichten.

Bevorzugt ist die erfindungsgemäße Silikon-Trennbeschichtung eine durchgängige Phase. Erfindungsgemäß bevorzugt weist die Trennbeschichtung pro Seite des Trägers nur eine einzige Silikonbeschichtung mit der definierten ersten Oberfläche auf. Somit sind erfindungsgemäße Trennschichten bevorzugt frei von zweischichtigen Silikonbeschichtungen mit zwischen den Silikonbeschichtungen liegenden Grenzflächen, die ein unkontrolliertes Abreißen oder Lösen der beiden Silikonbeschichtungen verursachen können. Hervorgerufen werden kann dies beispielweise durch ungewollt in der Grenzschicht eingeschlossene Luftblasen.

Bevorzugt weist die dem Trägermaterial abgewandte Oberfläche der erfindungsgemäßen Trennbeschichtung eine definierte Makrostruktur der Silikonbeschichtung bezüglich der Position der Vertiefungen und/oder eine definierte Mikrostruktur bezüglich der dreidimensionalen Geometrie und der jeweiligen inneren Oberfläche der Vertiefungen auf. Einzig durch eine Depolymerisation der Silikonbeschichtung im Wege der definierten Aufbringung von Depolymerisationsmittel auf die Oberfläche der vernetzten Silikonbeschichtung kann die Position der Vertiefungen, die dreidimensionale Geometrie und/oder die Oberflächenstruktur in den späteren Vertiefungen eingestellt werden. An den mit Depolymerisationsmitteln behandelten oder dotierten Positionen an der Oberfläche kann auch vor einer Vernetzung die Additionsvernetzung der Siloxane unterbunden werden, indem die Si-H-Gruppen hydrolysiert werden und die Polyorganosiloxane lokal depolymerisiert werden, so dass nach der Vernetzung die an diesen Positionen nicht vernetzten und hydrolysierten Polysiloxanfragmente entfernt werden können, vorzugsweise indem sie in einem Lösemittel oder Lösemittelgemisch zusammen mit dem Depolymerisationsmittel aufgenommen werden. Die so behandelte strukturierte Oberfläche der Trennschicht ist anschließend vorzugsweise frei von Depolymerisationsmitteln und nicht vernetzten und/oder hydrolysierten Polysiloxanen.

Ein weiterer Vorteil des Abwaschens der Depolymerisationsmittel kann eine Hemmung von Hydrosilylierungskatalysatoren an zuvor unbehandelten Stellen der Oberfläche sein, sowie eine Reaktion mit oberflächennahen Si-H-Gruppen. Diese SiH-Gruppen können katalysiert vom Platin-Katalysator zu einer Reaktion mit Bestandteilen von Acrylat-Klebmassen führen, was die Trennleistung der Silikonschicht stark verschlechtert. Dieser Effekt ist dem Fachmann als "acrylic lock-up" bekannt. Durch die Umsetzung der freien SiH-Gruppen können die Abzugskräfte des Trennmaterials oder Releaseliners nicht nur durch die Ausbildung von Vertiefungen in der Silikonschicht, insbesondere von definierten Strukturen in der Silikonschicht definiert eingestellt werden, sondern zusätzlich durch einen anschließenden Schritt des Abwaschens des Depolymerisationsmittels, wenn die bislang unbehandelte Oberfläche mit dem mit Wasch-Lösungsmittel verdünnten Depolymerisationsmittel in Kontakt kommt. Somit würde im ersten und im zweiten Schritt eine chemische Einstellung der Abzugskräfte erfolgen. Im ersten Schritt erfolgt die chemische Einstellung der Abzugskräfte über die Makrostruktur und/oder Mikrostruktur der ersten Oberfläche, d.h. über die Topographie der ersten Oberfläche und im zweiten Schritt über eine Inhibierung oder Hydrolyse verbliebener aktiver Si-H-Gruppen oder Katalysatoren. Alternativ können die Depolymerisationsmittel in starker Verdünnung zusammen mit nicht vernetzten oder hydrolysierten Polysiloxanen entfernt werden. In diesem Fall würden die Abzugskräfte nur durch die Oberflächenstruktur beeinflusst. Alternativ können die Depolymerisationsmittel mittels Luftstrom entfernt werden.

Dabei können die erfindungsgemäßen Trennbeschichtungen vorzugsweise eine erste Oberfläche aufweisen, deren Vertiefungen oder deren Mikrostruktur in Form einer dreidimensionalen Geometrie vorliegen, wie in Form von Löchern, Kavitäten, Poren, Fehlstellen, Defektstellen, Fugen, einer sinusförmigen Oberflächenstruktur, treppenförmigen Oberflächenstruktur, einer rotationssymmetrischen Oberflächenstruktur oder einer rotationssymmetrischen lokalen dreidimensionalen Geometrie, einer zylindrischen, kegelförmigen, polyedrischen, rechteckigen, einer quadratischen oder irregulären Geometrie, in Form eines Barcodes, Strichcode, 2D- und/oder 3D-Barcodes. Besonders bevorzugt sind die Vertiefungen der erfindungsgemäßen Trennbeschichtung in Form von Löchern, Kavitäten, Poren, Fehlstellen, Defektstellen und/oder Fugen ausgebildet, insbesondere in Form von Fehlstellen.

Darüber hinaus können jeweils unabhängig die lokalen Positionen der Vertiefungen sowie die Anordnung der Vertiefungen an der Oberfläche oder die Makrostruktur der Oberfläche irregulär oder regulär angeordnet sein, vorzugsweise in Form eines Musters, Motivs, Gitters, in Form von Lamellen, Fugen, zur Speicherung einer Information, als Datenpunkte, in Form einer Schrift oder zur Speicherung von Informationen, als ein Barcode, insbesondere als ein Strichbarcode, 2D-, oder 3D-Barcode. Auch die Herstellung von Fingerprints ist denkbar.

Zur Einstellung der Trennkräfte kann auch eine Struktur in Form von Schuppen oder die Nachbildung einer Oberflächenstruktur zur Erzeugung eines Lotus-Effektes nachempfunden sein, also Oberflächenstrukturen, die aus der Bionik bekannt sind, wie bspw. eine Haifischhaut. Desweiteren kann alternativ oder zusätzlich eine sinusförmige Oberflächenstruktur, eine Überlagerung, insbesondere in Form einer Addition oder Subtraktion von dreidimensionalen Strukturen, von mindestens zwei der vorgenannten Anordnungen oder Strukturen, eine Aneinanderreihung von mindestens zwei der vorgenannten Anordnungen oder Strukturen und/oder eine Zusammenstellung von mindestens zwei der vorgenannten Anordnungen oder Strukturen verwirklicht sein.

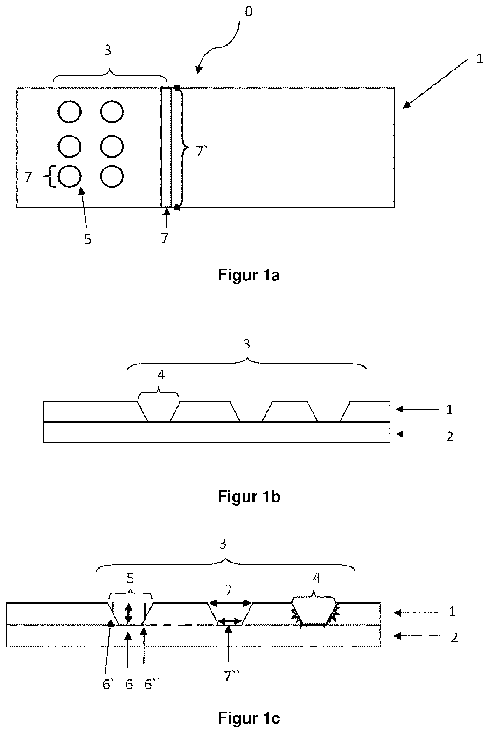

Die dabei realisierten Dimensionen der Vertiefungen oder der Mikrostruktur können jeweils unabhängig als Öffnung einer Vertiefung in der Fläche/Ebene innerhalb der ersten Oberfläche (Ebene der Öffnung einer Vertiefung, Figur 1a, (5)) einen ersten Durchmesser (Figur 1a,/c (7, 7', 7")) von 0,001 µm bis zur kompletten Breite des mit Silikon beschichteten Trägers aufweisen, während die Vertiefung alternativ oder zugleich eine Tiefe, dargestellt in Figur 1c, (6), von 0,1 µm bis 10 µm aufweisen kann, bevorzugt von 0,12 µm bis 3 µm, stärker bevorzugt von 0,15 µm bis 2,5 µm, insbesondere von 1,0 µm bis 1,5 µm. Dabei kann es nach einer Alternative bevorzugt sein, dass an der Position, an der die Depolymerisationsmittel aufgebracht wurden, die vernetzte Silikonbeschichtung komplett depolymerisiert wird. Nach dieser Alternative werden an den Positionen, an denen die Depolymerisationsmittel aufgebracht wurden, als Vertiefung durchgängige bzw. für Medien durchlässige Fehlstellen bzw. Durchbrechungen in der Trennbeschichtung erzeugt. Gegenstand der Erfindung sind somit auch erfindungsgemäße Trennbeschichtungen, worin die Vertiefungen Fehlstellen oder Durchbrechungen in der Trennbeschichtung darstellen. Insbesondere sind die Vertiefungen derart ausgebildet, dass das Trägermaterial in den Vertiefungen die äußere Oberfläche des Verbundes aus Trägermaterial und Trennbeschichtung bildet. Ferner sind Trennbeschichtungen Gegenstand der Erfindung, in denen die Vertiefungen Löcher bzw. Durchbrechungen in der Trennbeschichtung darstellen; insbesondere sind die Trennbeschichtungen an diesen Positionen für Medien durchgängig, vorzugsweise ähnlich einer Membran. Generell kann jeweils unabhängig auch eine Fläche/Ebene der Öffnung einer Vertiefung auch mittels eines zweiten Durchmessers definiert werden, der größer gleich 0,1 nm bis hin zu zwei äußeren, sich gegenüberliegenden seitlichen Begrenzungen der Trennschicht betragen kann. Typisch ist dies bei einer Ausbildung von Lamellen und/oder Fugen, die von einer seitlichen Begrenzung der Trennschicht zu einer weiteren seitlichen Begrenzung der Trennschicht reichen können.

Ein weiterer Gegenstand der Erfindung ist eine auf einem Trägermaterial aufgebrachte Trennbeschichtung, die dadurch gekennzeichnet ist, dass die Trennbeschichtung eine vernetzte Silikonbeschichtung ist und dass die Trenneigenschaften lokal durch partielle oder vollständige Entfernung der Silikonbeschichtung gezielt eingestellt werden können.

Ein mit der erfindungsgemäßen Trennbeschichtung versehener Releaseliner kann beidseitig mit einer Trennbeschichtung ausgerüstet sein, bevorzugt kann dann von jeder Trennbeschichtung eine erste Oberfläche die erfindungsgemäßen Vertiefungen, Makrostrukturen und/oder Mikrostrukturen aufweisen.
In diesen Fällen kann auf einer Seite die Abzugskraft reguliert und beispielsweise die zweite Seite bedruckbar sein.

Im erfindungsgemäßen Sinn wird unter einer dreidimensionalen Geometrie ein dreidimensionaler Hohlkörper einer dreidimensional beschränkten geometrischen Form verstanden, welche durch Grenzflächen, insbesondere der inneren Oberfläche der Vertiefungen in der Silikonbeschichtung und der Ebene der Öffnung der Vertiefung, beschrieben werden kann. Eine geometrische Form heißt dreidimensional, wenn sie in keiner Ebene vollständig enthalten ist, und beschränkt, wenn es eine Kugel gibt, welche diese Form vollständig enthält. Die bekanntesten Körper besitzen flache oder kreisbeziehungsweise kugelförmige Grenzflächen. Als Beispiele dienen Zylinder, Kegel, Kugel, Prisma, Pyramide, Tetraeder, Würfel sowie die fünf regulären Polyeder. Wenn ein Körper ausschließlich von ebenen Flächen begrenzt wird, spricht man von einem Polytop oder von einem beschränkten Polyeder (Vielflächner). Demgemäß kann eine erfindungsgemäße Vertiefung zumindest teilweise auch in Form eines der genannten Holkörper vorliegen oder ihnen angenähert sein, wie Parallelotop mit den Spezialfällen Quader und Hexaeder (Würfel); Prisma mit der Verallgemeinerung Zylinder und den Spezialfällen Quader und Hexaeder; Pyramide mit der Verallgemeinerung Kegel und dem Spezialfall Tetraeder; Antiprisma mit dem Spezialfall Oktaeder. "Angenähert" umfasst unter anderem auch abgerundete Kanten, Ecken sowie weitere Abweichungen von der Idealform.

Gemäß einer weiteren vorteilhaften Ausführungsform der Erfindung kann die Tiefe einer Vertiefung, dargestellt in Figur 1c, (6, 6', 6"), von 1 nm bis 10 µm, bevorzugt von 10 nm bis 3 µm, beispielsweise von 0,1 µm bis 2,5 µm, weiter bevorzugt 1 µm bis 1,5 µm betragen. Als Haupttiefe gilt dabei die Tiefe mit der größten Länge (Figur 1c, (6)). Als Nebentiefe gilt dabei eine Tiefe mit einer kleineren Länge (Figur 1c, (6', 6")). Eine Nebentiefe kann beispielsweise 0,01 µm bis 10 µm, bevorzugt 0,1 µm bis 8 µm und besonders bevorzugt 1 µm bis 4 µm, vorzugsweise 0,1 µm bis 2 µm, weiter bevorzugt 0,1 µm bis 1 µm betragen. Bei einer idealen Kugel oder bei einem Würfel sind die Längen von Haupttiefe und Nebentiefe identisch.

Zur Herstellung der Trennbeschichtung wird vorzugsweise ein Silikon ausgewählt aus der Gruppe Silikon, fluoriertes Silikon, Silikon-Copolymere und Mischungen aus zwei oder mehr der genannten Stoffe verwendet. Das Trennmittel kann lösungsmittelhaltige und/oder lösungsmittelfreie sowie wasserbasierte Silikon-Emulsionssysteme umfassen, bevorzugt werden lösungsmittelfreie Systeme.

Additionsvernetzende silikonbasierende Trennbeschichtungen lassen sich durch Hydrosilylierung härten. Diese Silikonbeschichtungen umfassen üblicherweise die folgenden Bestandteile:
ein alkenyliertes Polydiorganosiloxan, insbesondere lineare Polymere mit endständigen Alkenylgruppen,
optional einen dem Fachmann als MQ-Harz bekannten Release Modifier,
ein Polyorganowasserstoffsiloxan-Vernetzungsmittel sowie
einen Hydrosilylierungskatalysator.

Als Katalysatoren für additionsvernetzende Silikonsysteme, auch Hydrosilylierungskatalysatoren genannt, werden bevorzugt vorgenanntes Platin oder Platinverbindungen, wie zum Beispiel der Karstedt-Katalysator (eine Pt(0)-Komplexverbindung) eingesetzt.

Die Molmassen der endgruppenständig alkenylierten Polydiorganosiloxane liegen vorzugsweise im Bereich von Mw 400 g/mol bis 20.000 g/mol, stärker bevorzugt 5000 g/mol bis 20.000 g/mol, und die Molmassen der endgruppenständig Si-H-Gruppen tragenden Polyorganowasserstoffsiloxan-Vernetzungsmittel liegen vorzugsweise bei größer gleich Mw 400 bis kleiner gleich 6000 g/mol.

Des Weiteren können fluorierte Silikone und/oder Silikon-Copolymere Verwendung finden.

Gemäß einer besonders vorteilhaften Ausführungsform der Erfindung weist die Trennbeschichtung die folgende Zusammensetzung auf:
Als Trennbeschichtung wird ein additionsvernetzendes Silikonsystem umfassend ein vinylfunktionalisiertes Polysiloxan als Basispolymer, einen Methylhydrogensiloxan als Vernetzer, sowie einen Platinkatalysator eingesetzt. Weitere Anteile können andere übliche, dem Fachmann geläufige Additive sein, beispielsweise die Eigenschaften der Silikontrennbeschichtung modifizierende Harze, die auch als "release modifier resin" bezeichnet werden; vorzugsweise werden MQ-Resin oder CRA eingesetzt.

Ein weiterer Gegenstand der Erfindung ist ein Verfahren zur Herstellung einer auf einem Trägermaterial aufgebrachten Trennbeschichtung, das
(i) das Bereitstellen eines Trägermaterials, das mindestens einseitig eine vernetzte Silikonbeschichtung als Trennbeschichtung aufweist,
(ii) das Aufbringen eines Depolymerisationsmittels auf der dem Trägermaterial abgewandten Oberfläche der Trennbeschichtung derart, dass mindestens eine Vertiefung in der Oberfläche durch lokale Depolymerisation der Silikone erhalten wird, und
(iii) das Entfernen der Depolymerisationsmittel und der depolymerisierten Polyorganosiloxane nach der Depolymerisation
umfasst.
Optional kann das Depolymerisationsmittel auf beide ersten Oberflächen einer beidseitig mit erfindungsgemäßen Trennbeschichtungen versehenen Trägerfolie aufgebracht werden.

Bevorzugt werden die Depolymerisationsmittel und die depolymerisierten Polyorganosiloxane mit einem Lösemittel entfernt.

Erfindungsgemäß bevorzugt sind die Silikone der Trennbeschichtung additionsvernetzte Polyorganosiloxane. Die Vernetzung dieser Polymere erfolgt vorzugsweise durch Erhitzen, besonders bevorzugt bei einer Temperatur größer gleich 30 °C, insbesondere oberhalb 40 bis 250 °C, besonders vorzugsweise zwischen 80 bis 200 °C, weiter bevorzugt zwischen größer gleich 120 bis 180 °C.

Wie bereits beschrieben, werden das Depolymerisationsmittel und die depolymerisierten, vorzugsweise hydrolysierten Polyorganosiloxane nach der Depolymerisation entfernt. Dies kann jeweils unabhängig durch Verdünnen mit wässrigen Medien, Abwaschen mit organischen Lösemitteln oder Behandlung mit einem Luftstrom, gefolgt von einer wässrigen Behandlung und gefolgt von einem Trocknungsschritt erfolgen. Entsprechend einer bevorzugten Alternative werden die Depolymerisationsmittel und die depolymerisierten Polyorganosiloxane mit Lösemitteln, insbesondere mit wässrigen und/oder organischen Lösemitteln oder wässrigen Lösungsmittelgemischen entfernt.

Erfindungsgemäß bevorzugt werden im erfindungsgemäßen Verfahren Säuren, Basen oder Säuren oder Basen bildende Verbindungen als Depolymerisationsmittel eingesetzt. Besonders bevorzugt wird als Depolymerisationsmittel mindestens eine Säure oder Base eingesetzt. Insbesondere werden starke Brönsted-Säuren, wie auch mehrprotonige Säuren, und Basen, sowie auch mehrbasige Basen, oder Vorstufen, die starke Brönsted-Säure und Basen freisetzen, eingesetzt. Als starke Säuren gelten Säuren mit einem pKₛ-Wert kleiner gleich 10, vorzugsweise kleiner gleich 9, bevorzugt werden Säuren mit pKₛ-Werten kleiner gleich 5, bevorzugt mit pKₛ-Werten von -10 bis 4, in den erfindungsgemäßen Verfahren eingesetzt bzw. Verbindungen, die Säuren mit dieser Säurestärke freisetzen können. Im Gegenzug gelten als starke Basen oder als Verbindungen, die starke Basen freisetzen können, Verbindungen mit einem pK_{b}-Wert kleiner gleich 11, insbesondere mit einem pK_{b}-Wert kleiner gleich 10, bevorzugt kleiner gleich 5 bis optional minus -40. Ganz besonders bevorzugt weist die eingesetzte Säure einen pKₛ-Wert kleiner gleich 10 und die Base einen pK_{b}-Wert kleiner gleich 11 auf.

Dabei werden besonders bevorzugt als Depolymerisationsmittel Verbindungen ausgewählt aus der Gruppe bestehend aus Mineralsäure, Halogenwasserstoffsäure, Chlorwasserstoff, wässrige Salzsäure, Bromwasserstoff, Schwefelsäure, Schweflige Säure, Kieselsäure, Königswasser, Peroxosäuren, Chlorsulfonsäure, Salpetersäure, Salpetrige Säure, Phosphorsäure, Phosphonsäure, Phosphinsäure, organische Säure, insbesondere Ameisensäure, Essigsäure, Chloressigsäure, Citronensäure, Benzoesäure, Eisessig, ein organisches Anhydrid in Gegenwart von H₂O, wie beispielsweise Phthalsäureanhyrid, eine anorganische oder organische Base, Ammoniak, Alkalihydroxid, wie Natriumhydroxid, Kaliumhydroxid, Lithiumhydroxid, Erdalkalihydroxid, wie Calciumhydroxid, Magnesiumhydroxid, Lewis-Säuren, Lewis-Basen, Basenbildner, wie Alkalioxid, Erdalkalioxid, metallorganische Base, Metall-Alkoholat, wie Natriummethanolat, Natriumethanolat, Natriumpropanolat, Metall-Kohlenwasserstoff-Base mit 1 bis 20 C-Atomen, Butyllithium, Metallcarboxylate, Mischungen enthaltend mindestens zwei der vorgenannten Säuren oder Mischungen enthaltend mindestens zwei der vorgenannten Basen eingesetzt. Bevorzugte Alkalimetalle sind Natrium, Kalium, Lithium, und bevorzugte Erdalkalimetalle umfassen Calcium und Magnesium.

Nach bevorzugten Verfahrensvarianten werden die Depolymerisationsmittel nach der Depolymerisation beispielsweise durch einen Luftstrom, vorzugsweise aber durch Behandlung mit mindestens einem Lösemittel, einem Lösemittelgemisch oder einer wässrigen Lösung entfernt. Geeignete Lösemittel umfassen organische Lösemittel, wie protische, aprotische und/oder aromatische Lösemittel, vorzugsweise Alkohole, wie Ethanol, Propanol, oder auch wässrige alkoholische Lösungen. Ebenso können Ether, Petrolether, Ketone, wie THF, Methyl-iso-butylketon, Benzin oder andere dem Fachmann bekannte und geeignete Lösemittel zur Entfernung der Inhibitoren und der nicht vernetzten Polysiloxane verwendet werden.

Besonders bevorzugt kann die Vernetzung der additionsvernetzenden Polysiloxane bei einer Temperatur größer gleich 100 °C bis 250 °C durchgeführt werden.

Die erfindungsgemäßen Vorteile des Verfahrens zeigen sich in der Möglichkeit, eine einphasige Silikonbeschichtung ohne Limitierung der realisierbaren Makro- und/oder Mikrostrukturen der Oberfläche herstellen zu können und optional zugleich auf einen Zusatz von Additiven, die in der Silikonbeschichtung verbleiben, verzichten zu können.

Die erfindungsgemäßen Trennbeschichtungen können folglich durch lokale Depolymerisation und Entfernung des depolymerisierten Silikons eine definierte Struktur erhalten, wobei auch die Abzugskräfte eingestellt werden können. Zudem ist es nun möglich, Oberflächen in sehr hoher Auflösung von bis zu 10 nm und nach oben unbegrenzt, vorzugsweise jedoch bis in den Millimeterbereich, wie um 10 mm und mehr, herzustellen. Gemäß einer Alternative kann die Auflösung bis an zwei bis vier seitliche Begrenzungen der Trennbeschichtung oder des Releaseliners reichen. Daher ist es möglich, Oberflächen in sehr hoher Auflösung nach der Vernetzung bezüglich einer Makrostruktur und/oder Mikrostruktur zu strukturieren. Beispielsweise kann eine sternförmige oder kreuzförmige Struktur mit sehr hoher Auflösung auf der Trennbeschichtung erzeugt werden.

Als Methode zur Analyse der Makro- und/oder Mikrostruktur der Vertiefungen bietet sich die optische Mikroskopie an, die an nicht gefärbten oder auch an eingefärbten Proben, die mittels Pigmenten markiert wurden, durchgeführt werden kann. Weitere Methoden umfassen 2D-Raman-Mapping und EDX-Elektronenmikroskopie.

Der Ausdruck "Regulierung der Abzugskräfte" umfasst die Einstellung der Abzugskräfte auf ein bestimmtes Niveau. Nach dem erfindungsgemäßen Verfahren kann zusätzlich zur Einstellung der Abzugskräfte über die Struktur auch eine Reduzierung der Reifezeit der Silikonschicht erfolgen. Die Reduktion kann durch ein Abwaschen und/oder Verteilen der Depolymerisationsmittel erfolgen, weil die Depolymerisationsmittel mit gegenüber Säuren und Basen reaktiven Si-H Bindungen und Hydrosilylierungskatalysatoren in Kontakt kommen, die sie inhibieren können. Ammoniak kann beispielsweise hervorragend als Depolymerisationsmittel und als ein Mittel zur Reduzierung der Reifezeit eingesetzt werden. Als Reifezeit wird die Zeit zwischen der Herstellung des Releaseliners und der Kontaktierung mit einer auf dem Releaseliner abgelegten Haftklebemassenschicht verstanden (also die zeitliche Einstellung der Abzugskräfte auf einen für die Anwendung geeigneten Wert) und auch die Verhinderung von Reaktionen zwischen einer auf dem Releaseliner abgelegten Haftklebemasse und dem Silikon (also die Verhinderung der diesbezüglichen Alterung des Systems und somit die zeitliche Veränderung der Abzugskräfte). Dementsprechend schließt die bezeichnete Verwendung alle Vorgänge ein, die zumindest einen, besser alle der genannten Effekte bewirken.

Die Präsenz von Ammoniak oder anderen Säuren oder Basen mit Stickstoff-, Sauerstoff- oder Schwefel-Atomen, die zusätzlich als Inhibitoren wirken, insbesondere als Platingift, führt vorteilhaft dazu, dass eine platinkatalysierte Vernetzungsreaktion zwischen Bestandteilen der Klebmasse und den in der Trennbeschichtung befindlichen Si-H-Gruppen des Silikon-Vernetzers teilweise oder vollständig verhindert wird. Mit anderen Worten, durch die Inhibitoren bzw. Platingifte lassen sich die Reaktionen an der Grenzfläche Silikon/Klebmasse und damit die Abzugskräfte über die Bildung einer strukturierten Oberfläche hinaus beeinflussen.

Inhibitoren, die auch als Kontakt- oder auch Katalysatorgifte bezeichnet werden können, sind Stoffe, die die Oberfläche eines Katalysators belegen und dadurch temporär oder permanent seine Wirkung mindern oder auch gänzlich unterbinden, also Stoffe, die bei Kontakt mit Katalysatoren diese desaktivieren.

Die Behandlung der Trennbeschichtung kann auf unterschiedliche Weise erfolgen. Das Depolymerisationsmittel kann ohne oder auch mit Zusatz von Fremdstoffen, wie Trägergasen oder Lösungsmitteln, Hilfsstoffen oder dergleichen, auf die Silikonschicht(en) aufgebracht werden, insbesondere durch Auftragen, Aufwischen, Aufsprühen, Aufdrucken, Aufwalzen. Das Depolymerisationsmittel kann auch in An- oder Abwesenheit von Fremdstoffen aus der Gasphase aufgebracht, etwa aufgedampft, werden, oder als Aerosol in Anwesenheit eines entsprechenden Fremdstoffs aufgebracht werden, etwa als Nebel oder als Dampf. Flüssig vorliegende Depolymerisationsmittel können direkt aufgebracht werden, insbesondere durch eines der nachstehend genannten Verfahren. Dabei kann den wässrigen Lösungen der Säuren oder Basen ein Additiv zugesetzt werden, das eine Einstellung der Tröpfchengröße in Sprühnebeln reguliert und vorzugsweise ein Zusammenlaufen auf der Trennschicht unterbindet.

Erfindungsgemäß können die Depolymerisationsmittel mit üblichen Verfahren, insbesondere auf die bereits vernetzte, alternativ auch auf die noch unvernetzte Silikonbeschichtung aufgebracht werden. Bevorzugt können die Depolymerisationsmittel mittels üblicher Druck- oder auch Transferverfahren aufgebracht werden. Zu nennen sind Contact-Printing, Gravurdruck, Siebdruck, Tampondruck, Microcontact-Printing, Druckplatten, Ink-Jet-Printing, Flexo-Printing, Spray coating, Gravurwalzenauftrag. Aerosol-Jet Printing. Die Depolymerisationsmittel können auch durch Pinseln, Tupfen, Streuen, Sieben, Sputtern, Sprühen, Einspritzen, Einritzen, Gravieren aufgetragen werden. Die Auftragung der Depolymerisationsmittel kann dabei als Reinsubstanz, in Lösung, in einer Formulierung, als Paste oder als Aerosol erfolgen. Je nach gewollter Struktur können Verbindungen zugesetzt werden, die einen Einfluss auf den Kontaktwinkel haben und eine gute Benetzung der Oberfläche bis hin zu einer schlechten Benetzung der Oberfläche bewirken. Zur Auftragung kann beispielsweise eine Walze mit einer austauschbaren Kunststoffumhüllung als Druckplatte, bspw. aus kristallinem Polypropylen oder Teflon, verwendet werden. Diese Art der Auftragung empfiehlt sich bei stark sauren oder basischen Lösungen, Pasten oder reinen Säuren oder Basen. Bevorzugte Druckplatten oder Stempel weisen eine poröse Struktur auf, so dass sie die Depolymerisationsmittel aufnehmen und definiert auf die Trennbeschichtung übertragen können. Eine ammoniakalische Lösung kann beispielsweise bevorzugt mittels Sprühauftragung und Verwendung einer Negativform auf die Trennbeschichtung aufgetragen werden.

Ein weiterer Gegenstand der Erfindung ist eine Trennbeschichtung, die nach einem erfindungsgemäßen Verfahren erhältlich ist.

Zur Herstellung von Releaselinern mit zwei beidseitig angebrachten erfindungsgemäßen Trennbeschichtungen kann die Trägerfolie beidseitig mit Trennbeschichtungen versehen werden, die jeweils unterschiedliche Oberflächenstrukturen und Trenneigenschaften aufweisen können und optional mit Haftklebemassen kaschiert werden können.

In den erfindungsgemäß hergestellten Trennbeschichtungen kann über die jeweils gewählten Verfahrensbedingungen eine Regulierung der Abzugskräfte, mit denen die Trennbeschichtung von einer auf sie beschichteten Haftklebemasse abgezogen wird, eingestellt werden. Entsprechend kann auch die lokale Bedruckbarkeit, die lokale Benetzbarkeit mit flüssigen Medien, die Oberflächenrauigkeit und/oder eine Informationsspeicherung eingestellt werden. Eine entsprechende Verwendung der erfindungsgemäßen Trennbeschichtung ist ein weiterer Gegenstand der Erfindung.

Ebenfalls Gegenstand der Erfindung ist eine Trennbeschichtung zur Verwendung mit einem Releaseliner, wobei die Trennbeschichtung eine vernetzte Silikonbeschichtung basierend auf in Gegenwart von Hydrosilylierungskatalysatoren additionsvernetzten Polyorganosiloxanen ist und die Silikonbeschichtung auf mindestens einer der beiden Oberflächen mindestens eine Vertiefung aufweist, die erhältlich ist durch eine lokale oberflächennahe Depolymerisation der Polyorganosiloxane. Dabei kann die Trennbeschichtung die vorgenannte Makro- und/oder Mikrostruktur aufweisen, die vorzugsweise entsprechend einer vorgenannten Depolymerisation einer Silikonbeschichtung erhalten werden kann. Bevorzugt weisen die Vertiefungen auf der Oberfläche der Trennbeschichtung jeweils unabhängig eine definierte Position auf der Oberfläche und eine definierte Geometrie auf.

Gleichfalls Gegenstand der Erfindung ist die Verwendung einer erfindungsgemäßen Trennbeschichtung oder einer nach dem erfindungsgemäßen Verfahren hergestellten Trennbeschichtung in einem Klebeband, in einem Releaseliner sowie in Etiketten, Stanzlingen, Folien, als Fälschungsschutz, als bedruckbare Trennbeschichtung, als Trennbeschichtung, welche lokal mit fluiden Medien benetzbar ist und/oder als Sicherheitsmerkmal.

In weiteren Verwendungen können mit Farbe bedruckbare Trennbeschichtungen hergestellt werden. Üblicherweise wird ein einseitiges Klebeband auf der Klebemassenseite mit einem Releaseliner eingedeckt. Bei einem zweiseitigen Klebeband kann ein Releaseliner ausreichen, es können aber auch beide Klebemassenseiten mit jeweils einem Releaseliner ausgerüstet sein.

Ebenso Gegenstand der Erfindung ist ein Releaseliner, welcher die erfindungsgemäße Trennbeschichtung umfasst.
Gleichfalls Gegenstand der Erfindung ist eine Trennbeschichtung als zumindest eine Schicht auf einem Releaseliner, mit dem ein- oder beidseitig klebendes Klebeband ein- oder beidseitig eingedeckt ist.

Gegenstand der Erfindung ist weiterhin die Verwendung einer erfindungsgemäßen Trennbeschichtung in Form zumindest einer Schicht auf einem Träger, so dass ein Releaseliner entsteht, welcher in direktem Kontakt zu einer (Haft)-Klebemasse eingesetzt werden kann. Hierzu wird die Beschichtung bevorzugt als geschlossene Schicht auf einen Releaseliner aufgetragen. Vorzugsweise ist der Releaseliner beidseitig mit der Trennbeschichtung ausgerüstet.

Die Silikone werden - lösungsmittelfrei oder aus Lösung - auf den Träger aufgebracht, wobei alle dem Fachmann geläufigen Beschichtungsverfahren verwendet werden können, dort erforderlichenfalls getrocknet (das Lösemittel abgezogen) und bilden anschließend eine bevorzugt geschlossene Silikonbeschichtung.

Erfindungsgemäß vorteilhafte, thermisch härtende Trennbeschichtungen auf Basis von additionsvernetzenden Silikonen sind häufig Mehrkomponentensysteme, welche typischerweise aus folgenden Komponenten bestehen:
a) einem linearen oder verzweigten Polydimethylsiloxan, welches aus ca. 80 bis 200 Dimethylsiloxan-Einheiten besteht und an den Kettenenden mit Vinyldimethylsiloxy-Einheiten abgestoppt ist, oder einem linearen Polydimethylsiloxan, welches aus ca. 80 bis 200 Dimethylsiloxan-Einheiten und ca. 1 bis 10 Methylvinylsiloxan-Einheiten besteht sowie an den Kettenenden mit Vinyldimethylsiloxy-Einheiten abgestoppt ist. Typische Vertreter sind zum Beispiel lösungsmittelfreie, additionsvernetzende Silikonöle, wie DEHESIVE® 920, 912 oder 610, alle kommerziell erhältlich bei Wacker-Chemie GmbH, oder wie SYL-OFF® SL 9104, kommerziell erhältlich bei Dow Corning GmbH;
b) einem linearen, cyclischen oder verzweigten Vernetzer oder einer beliebigen Mischung dieser, wobei der Vernetzer üblicherweise aus Methylhydrogensiloxy- und Dimethylsiloxy-Einheiten beziehungsweise nur aus Methylhydrogensiloxy-Einheiten zusammengesetzt ist und die Kettenenden entweder mit Trimethylsiloxy-Gruppen oder Dimethylhydrogensiloxy-Gruppen abgesättigt sind. Typische Vertreter dieser Produktklasse sind zum Beispiel Hydrogenpolysiloxane mit hohem Gehalt an reaktivem Si-H wie die Vernetzer V24, V90 oder V06, welche bei Wacker-Chemie GmbH kommerziell erhältlich sind, oder der Vernetzer SYL-OFF® 7689, kommerziell erhältlich bei Dow Corning GmbH;
c) einem Silikon-MQ-Harz, welches als M-Einheit neben den üblicherweise verwendeten Trimethylsiloxy-Einheiten auch über Vinyldimethylsiloxy-Einheiten verfügt. Typische Vertreter dieser Gruppe sind zum Beispiel die Trennkraftregler CRA® 17 oder CRA® 42, kommerziell erhältlich bei Wacker-Chemie GmbH, oder SYL-OFF® SL 9154, kommerziell erhältlich bei Dow Corning GmbH;
d) einem silikonlöslichen Platinkatalysator wie zum Beispiel einem Platindivinyltetramethyldisiloxan-Komplex, welcher üblicherweise als Karstedt-Komplex bezeichnet wird und beispielsweise unter der Bezeichnung Katalysator OL bei Wacker-Chemie GmbH oder unter der Bezeichnung SYL-OFF® 4000 bei Dow Corning GmbH kommerziell erhältlich ist. Die Silikone werden auf dem Träger aufgebracht und bilden vorzugsweise eine geschlossene Silikonbeschichtung.

Bevorzugt wird die Trennbeschichtung mit einer Schichtdicke von 0,1 bis 5,0 µm aufgebracht, weiter vorzugsweise von 0,2 bis 2,5 µm, besonders bevorzugt von 0,4 bis 2,0 µm.

Als Trägermaterial des Liners können insbesondere Papiere oder Folien eingesetzt werden. Als Folien werden dabei bevorzugt solche aus biaxial verstrecktem Polyethylenterephthalat, Polybuten, Polypropylen, Polyethylen, monoaxial verstrecktem Polypropylen, biaxial verstrecktem Polypropylen oder Polyethylen verwendet, besonders vorzugsweise Polyolefinfolien (Polypropylen- und Polyethylenfolien) oder Polyesterfolien.

Als Klebemasse ist in dem Klebeband, das mit dem Liner abgedeckt ist, eine Haftklebemasse vorhanden, so dass sich ein einseitig klebendes Klebeband ergibt, in dem die Beschichtung als Trennmittel wirkt.
Als Haftklebemassen werden Klebemassen bezeichnet, die bereits unter relativ schwachem Andruck eine dauerhafte Verbindung mit dem Haftgrund erlauben. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen beruht auf ihren adhäsiven Eigenschaften und die Wiederablösbarkeit auf ihren kohäsiven Eigenschaften. Als Basis für Haftklebemassen kommen verschiedene Verbindungen in Frage.

Als Beispiele für Haftklebemassen, aber ohne eine Einschränkung vornehmen zu wollen, seien als vorteilhaft im Sinne dieser Erfindung die folgenden genannt: Acrylat-, Silikon-, Naturkautschuk-, Synthesekautschuk-, Styrolblockcopolymermassen, mit einem Elastomerblock aus ungesättigten oder hydrierten Polydienblöcken (Polybutadien, Polyisopren, Copolymeren aus beiden sowie weitere, dem Fachmann geläufige Elastomerblöcke) sowie weitere, dem Fachmann geläufige Haftklebemassen, für die insbesondere silikonhaltige Trennbeschichtungen verwendet werden können. Wird im Rahmen dieser Schrift von Haftklebemassen auf Acrylatbasis gesprochen, so seien hiervon auch ohne explizite Erwähnung Haftklebemassen auf Basis von Methacrylaten und auf Basis von Acrylaten und Methacrylaten umfasst, sofern nicht ausdrücklich anders beschreiben. Ebenfalls im Sinne der Erfindung sind Kombinationen und Blends mehrerer Basispolymere sowie mit Klebharzen, Füllstoffen, Alterungsschutzmitteln und Vernetzern additivierte Klebemassen, wobei die Aufzählung der Additive nur beispielhaft und nicht einschränkend zu verstehen ist.

Der Träger oder Liner des Klebebands wird einseitig mit dem bevorzugten Haftkleber aus Lösung oder Dispersion oder ohne flüssige Zusätze (zum Beispiel Schmelze) oder durch Coextrusion beschichtet. Alternativ ist eine Beschichtung durch Transfer einer Klebemassen-Schicht durch Kaschieren möglich. Die Klebeschicht(en) können durch Wärme oder energiereiche Strahlen vernetzt werden.

Zur Optimierung der Eigenschaften kann bevorzugt die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutzmitteln, Vernetzungsmitteln, Vernetzungspromotoren oder Elastomeren abgemischt sein.

Die Menge der Klebstoffschicht beträgt bevorzugt 10 bis 120 g/m², vorzugsweise 25 bis 100 g/m² (gemeint ist die Menge nach einer eventuell notwendigen Entfernung von Wasser oder Lösungsmittel; die Zahlenwerte entsprechen auch in etwa der Dicke in um).

Vorteilhaft ist eine physikalische Vorbehandlung der mit Haftklebemasse zu beschichtenden Trägerseite zur Verbesserung der Haftung, beispielsweise durch Flamm-, Plasma- oder Coronabehandlung.

Bei Bedarf kann vor dem Aufbringen der Haftkleberschicht auf dem Träger eine Primerschicht, insbesondere lösungsmittelfrei wie zum Beispiel durch Coextrusion, aufgebracht werden, so dass sich zwischen der Trägerschicht und einer Haftkleberschicht eine Primerschicht befindet.

Als Primer sind die bekannten Dispersion- und Lösungsmittelsysteme verwendbar, zum Beispiel auf Basis von isopren- oder butadienhaltigen Kautschuken und/oder Cyclokautschuken. Isocyanate oder Epoxyharze als Additive verbessern die Haftung und erhöhen zum Teil auch die Scherfestigkeit des Haftklebstoffes. Physikalische Oberflächenbehandlungen wie Beflammung, Corona oder Plasma oder Coextrusionsschichten sind ebenfalls geeignet, die Haftung zu verbessern. Besonders bevorzugt ist die Nutzung vorgenannter Verfahren bei Verwendung lösungsmittelfreier Klebstoffschichten, insbesondere solche auf Acrylatbasis. Beschreibungen der üblichen Primer finden sich zum Beispiel in "Handbook of Pressure Sensitive Adhesive Technology", D. Satas, (3. Auflage).

Besonders vorteilhaft findet der Releaseliner in einem Klebeband Verwendung, das zum Verbinden von Papier- oder Folienbahnen eingesetzt wird. Flache, bahnförmige Materialien, insbesondere Papier, werden zu Ballen gewickelt. Solche Ballen werden zum Beispiel papierverarbeitenden Maschinen oder Druck- beziehungsweise Verpackungsmaschinen zugeführt. Beim Dauerbetrieb solcher Anlagen ist es notwendig, an das Ende eines ersten Ballens des flachen, bahnförmigen Materials im fliegenden Wechsel den Beginn eines neuen aufgewickelten Ballens anzusetzen und in geeigneter Weise zu verbinden, ohne beim Wechsel der Rollen die schnelllaufenden Maschinen anhalten zu müssen. Dieser Vorgang wird als Spleißen (engl. "splice") bezeichnet. Hierfür werden in der Papierindustrie doppelseitig klebende Selbstklebebänder eingesetzt, die im Wesentlichen aus einer Trägerschicht und zwei Selbstklebemasseschichten bestehen, um eine Verbindung zwischen dem Ende der alten Materialbahn und dem Anfang der neuen Materialbahn herzustellen. Das Ende der alten Materialbahn wird dabei mit dem Anfang der neuen Materialbahn verklebt.

Zur Vermeidung der Produktpiraterie können aber auch Releaseliner hergestellt werden, die Sollbruchstellen aufweisen und bei denen optional unterschiedliche Trennkräfte an der Trennbeschichtung realisiert wurden. In diesen Systemen verbleibt ein Teil der Trennbeschichtung auf der Haftklebemasse - bei einem Versuch, diese zu entfernen - zurück. Auch ist die Freisetzung von Farbe durch ein Lösen der Trennbeschichtung möglich, um ein Markenprodukt damit auszurüsten. Ebenso Gegenstand der Erfindung sind erfindungsgemäße Releaseliner und/oder erfindungsgemäße Trennbeschichtungen zur Verwendung als Sicherheitsmerkmal.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Etiketten, Stanzlinge und dergleichen.

"Lösungsmittelhaltige Trennbeschichtung" bzw. "lösungsmittelhaltiges Silikon-Trennsystem" bedeutet, dass das betreffende Trennsystem als tatsächlich lösungsmittelhaltiges System aufgetragen wird, nach der in der Regel thermisch initiierten Vernetzung jedoch nur noch maximal Spuren des Lösemittels im Trennsystem vorliegen. Der Fachmann spricht dennoch von einem "lösungsmittelhaltigen System" und kennzeichnet damit die speziellen Eigenschaften einer solchen Lösungsmittel-basiert erhaltenen Trennbeschichtung.

Die erfindungsgemäße Trennbeschichtung wird in den Figuren 1a-c näher erläutert, ohne die Erfindung auf diese Beispiele zu begrenzen.

Figuren 1a-c: Erfindungsgemäße Trennbeschichtungen mit Vertiefungen mit Darstellung einer Makro- (3) und Mikrostruktur (4).

In Figur 1a ist ein Verbund aus Trägermaterial und Trennbeschichtung (0) mit einer Trennbeschichtung (1) und einer durch die Depolymerisation erhaltenen Makrostruktur (3) zusammen mit den jeweiligen Positionen der Vertiefungen (5) dargestellt. Eine Vertiefung weist einen Durchmesser (7') auf, der sich über die gesamte Breite der Trennbeschichtung in Form einer Fuge mit nur geringem Durchmesser (7) erstreckt. Bei Vertiefungen mit annähernd runden Öffnungen der Vertiefungen entspricht der Durchmesser (7) annähernd einem Kreisdurchmesser. Die Öffnung entspricht in diesem Fall einer Kreisebene.

Figuren 1b und 1c zeigen die Makrostruktur (3) sowie die Mikrostruktur (4) der Vertiefungen. So ist die innere Oberfläche einer Vertiefung in Figur 1b zusätzlich profiliert. Ferner zeigt Figur 1c die verschiedenen einstellbaren Tiefen (6, 6', 6") und divergierenden Durchmesser (7, 7") der Vertiefungen auf.

Als Methoden zur Analyse der Makro- und/oder Mikrostruktur der Vertiefungen bieten sich die optische Mikroskopie an, die an nicht gefärbten oder auch an eingefärbten Proben durchgeführt werden kann, die mittels Pigmenten markiert wurden. Weitere Methoden umfassen 2D-Raman-Mapping, EDX-Elektronenmikroskopie.

Konkordanzliste:
- 0: Releaseliner
- 1: Trennbeschichtung aus vernetztem Silikon
- 2: Trägerfolie
- 3: Makrostruktur, entspricht auch der zweidimensionalen Anordnung der Positionen der Vertiefungen
- 4: Mikrostruktur
- 5: Vertiefung
- 6: Tiefe der Vertiefung (größte Tiefe)
- 6': eine Tiefe der Vertiefung ("Nebentiefe")
- 6": eine weitere Tiefe der Vertiefung ("Nebentiefe")
- 7: Durchmesser der Fläche/Ebene, Durchmesser der Ebene der Öffnung einer Vertiefung
- 7': Durchmesser der Öffnung einer Vertiefung, die zugleich der äußeren Begrenzung der Releaseliner entspricht
- 7": Durchmesser einer inneren Öffnung einer Vertiefung

### Beispiele

Die Erfindung soll im Folgenden durch Beispiele erläutert werden, ohne sie dadurch einzuschränken. Solange es nicht anders angegeben wird, sind alle Anteile von Komponenten jeweils auf ihr Gewicht bezogen angegeben.

### Silikonbeschichtung:

Diese Silikon-Zusammensetzung wurde für alle Beispiele als Trennsystem eingesetzt.

| Basispolymer | Wacker DEHESIVE(R) 971 |
|---|---|
| Einwaage Basispolymer [g] | 9,9 |
| | |
| Vernetzer | Wacker V24 |
| Einwaage Vernetzer [g] | 0,4473 |
| | |
| Katalysator | Wacker Cat OL |
| Katalysator [ppm] | 80 |
| | |
| Additiv | Wacker HF 86 |
| Einwaage Additiv [g] | 0,1 |
| | |
| Lösemittel | Benzin 60/95 |
| Lösemittelzugabe [g] | 3,5091 |

### Herstellung und Beschichtung der Trennsysteme:

Es wurden Releaseliner auf einer 75 µm PET-Folie mit einem Single Roll Lab Coater der Fa. Euclid Coating Systems, Inc. hergestellt, indem die vorstehend angegebene Trennsystem-Formulierung über eine Labor-Beschichtungsanlage aufgebracht wurde. Das Beschichtungsgewicht des Silikons lag bei 1,5 g/cm², was einer ca. 1,5 µm dicken Schicht entspricht. Nach der Beschichtung wurden die Trennsysteme im Umluftofen 15 s lang bei 150 °C vernetzt. Anschließend wurde an definierten lokalen Positionen das Depolymerisationsmittel (Ammoniak) als Tropfen aufgetragen. Das Depolymerisationsmittel konnte über 5 Minuten einwirken und wurde anschließend mit einer wässrigen/alkoholischen Lösung zusammen mit dem depolymerisierten Polyorganosiloxan abgespült und getrocknet, sodass eine runde Vertiefung im Silikonsystem entstand, die das Silikonsystem an der benetzten Stelle bis hin zum Träger depolymerisiert hat. Die auf diese Art hergestellten Liner wurden im Hinblick auf ihre Trennkräfte mittels Zugprüfung sowie mikroskopisch untersucht.

### Messung der Abzugskraft / Kraftspitzen:

Labormuster der oben beschriebenen Releaseliner wurden mit einer modifizierten lösungsmittelhaltigen Acrylatklebmasse beschichtet. Das Lösungsmittel wurde abgedampft und Klebmasse auf dem Liner über 15 Minuten / 120 °C vernetzt. Anschließend wurde mit geätzter PET-Folie (23 µm Dicke) eingedeckt. Die Proben wurden über Nacht in einem klimatisierten Messraum bei 23 °C und 50 % relativer Luftfeuchtigkeit gelagert.

Dann wurde das Trennverhalten mit Hilfe einer Zugprüfung bestimmt. Hierzu wurden 20 mm breite Streifen des Lappenmusters in eine Zugprüfmaschine eingespannt. Der Liner wurde bei 300 mm/min von der Klebmasse abgetrennt, die dabei auftretende Kraft wurde über eine Kraftmessdose protokolliert, zudem wurde die Zuglänge aufgenommen. Je nach Größe des erzeugten Fehlers ergaben sich Kraftspitzen, die dann einem bestimmten Loch zugeordnet wurden.

### Messung des Silikonauftrags:

Bei silikonbasierten Trennsystemen wurde der Auftrag des Trennsystems über Röntgenfluoreszenzanalyse bestimmt. Dazu wird der mit dem zu untersuchenden Trennsystem beschichtete Träger mit dem Röntgenfluoreszenz-Analysator Lab-X³⁰⁰⁰ der Firma Oxford mit interner (Polydimethylsiloxan-) Referenz analysiert.

### Beispiel 1

In Beispiel 1 wurde an drei nach den oben beschriebenen Vorschriften hergestellten, mit der Silikonschicht beschichteten Folien durch lokale Applikation von Ammoniak in Form von 4 Tropfen definierter Größe an definierten Positionen auf der Trennbeschichtung das Silikon lokal gezielt depolymerisiert, und das Depolymerisationsmittel sowie die flüssigen Depolymerisationsprodukte des Silikons wurden entfernt.

Wie oben beschrieben wurde die Klebmasse auf die so hergestellten strukturierten Silikonschichten der Trennfolien gegeben, und diese wurden wie oben beschrieben unter Messung der dafür benötigten Kraft abgezogen.

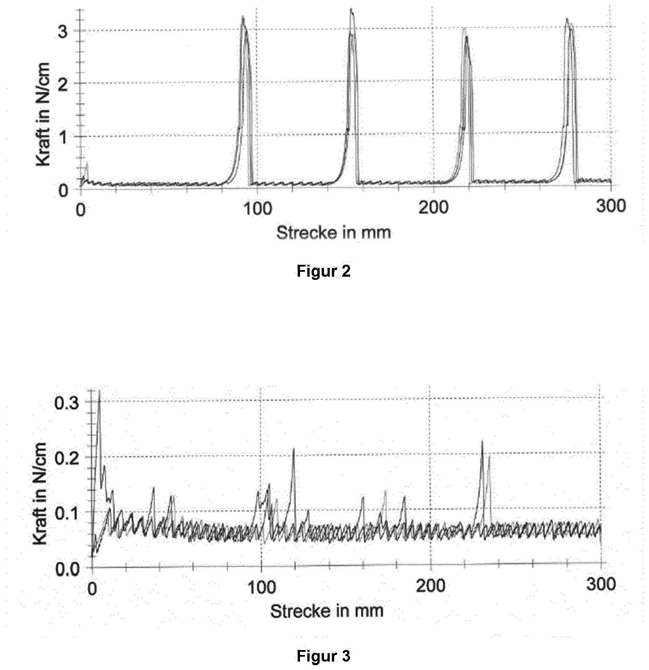

Zur Überprüfung der Reproduzierbarkeit wurde die Messung an drei Proben durchgeführt. Das in Figur 2 dargestellte Messprotokoll zeigt die hohe Reproduzierbarkeit der Strukturierung.

Die Ergebnisse der Untersuchungen sind in Tabelle 1 und in Figur 2 zusammengefasst. Tabelle 1 stellt die Auswirkung der erfindungsgemäßen Oberflächenstruktur auf die Abzugskraft von Release Linern dar.
Prüfgeschwindigkeit: 300 mm/min
Probenbreite: 20 mm
Vormessweg: 50 mm
Messweg: 250 mm

**Tabelle 1: Messung Kraftspitzen/Abzugskraft**

| Liner Nr. | Fmin Lm [N/cm] | Fmax Lm [N/cm] | Breite Muster [mm] |
|---|---|---|---|
| 1 | 0,05 | 3,17 | 20 |
| 2 | 0,05 | 3,27 | 20 |
| 3 | 0,05 | 3,40 | 20 |

Die in Figur 2 dargestellten Ergebnisse der vermessenen Kraftspitzen zeigen gut die Reproduzierbarkeit und enge Einstellbarkeit der Kraftspritzen auf einer erfindungsgemäßen Trennbeschichtung. Die bei den Releaselinern Nr. 1-3 festgestellten Kraftspitzen treten reproduzierbar an denselben Stellen der Abzugsstrecke - nämlich an den in der Trennbeschichtung vorliegenden Vertiefungen - der Liner auf. Die in Tabelle 1 dargestellten Werte zeigen, dass die erfindungsgemäßen Vertiefungen bei den hier durchgeführten Messungen einen lokalen Einfluss von bis zu 3,4 N/cm auf die Abzugskraft der Releaseliner zeigen. Fmin steht dabei für die Abzugskraft an den unversehrten Bereichen der Trennschicht, Fmax für die maximal benötigte Abzugskraft an den Vertiefungen. Tabelle 2 zeigt die hohe Korrelation der Kraftspitzen der Abzugskraft bei Delamination von Klebmasse mit der Größe der Löcher in der Silikonschicht.

**Tabelle 2: Die Kraftspitzen bei Delamination von Klebmasse korrelieren mit der Größe der Vertiefungen in der Silikonschicht**

| Durchmesser der Vertiefung [mm] | Depolymerisationsmittel | Kraftspitze bei Delamination der Klebmasse [N/cm] |
|---|---|---|
| 1,56 | Amoniak | 1,20 |
| 1,61 | Amoniak | 1,70 |
| 1,69 | Amoniak | 1,80 |
| 1,83 | Amoniak | 1,90 |
| 2,06 | Amoniak | 2,60 |
| 2,73 | Amoniak | 3,00 |
| 2,88 | Amoniak | 3,10 |
| 3,04 | Amoniak | 3,25 |
| 3,28 | Amoniak | 3,30 |
| 3,45 | Amoniak | 3,60 |
| 1,68 | Amoniak | 3,65 |

### Vergleichsbeispiel 2

Eine wie in Beispiel 1 hergestellte und mit einer Silikontrennschicht beschichtete Folie wurde mit einer dünnen Nadel strukturiert. Dabei wurde die Nadel mit leichtem mechanischem Druck auf der Silikonschicht in einer Linie gezogen.

Nach Aufbringen von Klebmasse wie in Beispiel 1 beschrieben und anschließender Delamination der Klebmasse unter Messung der Abzugskraft wurde deutlich, dass die Kraftspitzen nicht an definierten Positionen der Abzugsstrecke auftreten und somit mit dieser Methode keine gezielte lokale Einstellung der Trenneigenschaften möglich ist (Figur 3).

## Patentansprüche

1. Verfahren zur Herstellung einer auf einem Trägermaterial aufgebrachten Trennbeschichtung, umfassend
(i) das Bereitstellen eines Trägermaterials, das mindestens einseitig eine vernetzte Silikonbeschichtung als Trennbeschichtung aufweist,
(ii) das Aufbringen eines Depolymerisationsmittels auf der dem Trägermaterial abgewandten Oberfläche der Trennbeschichtung derart, dass mindestens eine Vertiefung in der Oberfläche durch lokale Depolymerisation der Silikone erhalten wird, und
(iii) das Entfernen der Depolymerisationsmittel und der depolymerisierten Polyorganosiloxane nach der Depolymerisation.

2. Verfahren nach Anspruch 1, **dadurch gekennzeichnet, dass** die Silikone additionsvernetzte Polyorganosiloxane sind.

3. Verfahren nach einem der Ansprüche 1 und 2, **dadurch gekennzeichnet, dass** die Depolymerisationsmittel und die depolymerisierten Polyorganosiloxane mit einem Lösemittel entfernt werden.

4. Verfahren nach einem der Ansprüche 1 bis 3, **dadurch gekennzeichnet, dass** die Depolymerisationsmittel aufgebracht werden durch Druckverfahren, Pinseln, Tupfen, Streuen, Sieben, Sputtern, Sprühen, Einspritzen, Einritzen oder Gravieren.

5. Verfahren nach einem der Ansprüche 1 bis 4, **dadurch gekennzeichnet, dass** als Depolymerisationsmittel mindestens eine Säure oder Base eingesetzt wird.

6. Verfahren nach Anspruch 5, **dadurch gekennzeichnet, dass** die Säure einen pKₛ-Wert kleiner gleich 10 und die Base einen pK_{b}-Wert kleiner gleich 11 aufweist.

7. Verfahren nach einem der Ansprüche 1 bis 6, **dadurch gekennzeichnet, dass** das Depolymerisationsmittel ausgewählt ist aus der Gruppe bestehend aus Chlorwasserstoff, wässriger Salzsäure, Bromwasserstoff, Schwefelsäure, Schwefliger Säure, Kieselsäure, Königswasser, Peroxosäuren, Chlorsulfonsäure, Salpetersäure, Salpetriger Säure, Phosphorsäure, Phosphonsäure, Phosphinsäure, Ameisensäure, Essigsäure, Chloressigsäure, Citronensäure, Benzoesäure, Eisessig, organischen Anhydriden in Gegenwart von H₂O, Lewis-Säuren, Lewis-Basen, anorganischen oder organischen Basen, Ammoniak, Alkalihydroxid, Erdalkalihydroxid, Alkalioxiden, Erdalkalioxiden, metallorganischen Basen, Metall-Alkoholaten, Metall-Kohlenwasserstoff-Basen mit 1 bis 20 C-Atomen, Butyllithium, Metallcarboxylaten, Mischungen enthaltend mindestens zwei der vorgenannten Säuren und Mischungen enthaltend mindestens zwei der vorgenannten Basen.

8. Verfahren nach einem der Ansprüche 1 bis 7, **dadurch gekennzeichnet, dass** auf der dem Trägermaterial abgewandten Oberfläche der Trennbeschichtung eine definierte Makrostruktur bezüglich der Position der Vertiefungen und/oder eine definierte Mikrostruktur bezüglich der dreidimensionalen Geometrie (3D) und/oder der jeweiligen inneren Oberfläche der Vertiefungen hergestellt wird.

## Claims

1. Process for the production of a release coating applied on a carrier material, comprising
(i) the provision of a carrier material which on at least one side has a crosslinked silicone coating as release coating,
(ii) the application of a depolymerization agent on that surface of the release coating that faces away from the carrier material so as to obtain at least one depression in the surface via local depolymerization of the silicones,
and
(iii) the removal of the depolymerization agents and of the depolymerized polyorganosiloxanes after the depolymerization procedure.

2. Process according to Claim 1, **characterized in that** the silicones are addition-crosslinked polyorganosiloxanes.

3. Process according to Claim 1 or 2, **characterized in that** the depolymerization agents and the depolymerized polyorganosiloxanes are removed with a solvent.

4. Process according to any of Claims 1 to 3, **characterized in that** the depolymerization agents are applied via print processes, brushing, padding, scattering, sieving, sputtering, spraying, injection, scoring or engraving.

5. Process according to any of Claims 1 to 4, **characterized in that** at least one acid or base is used as depolymerization agent.

6. Process according to Claim 5, **characterized in that** the pKₐ of the acid is less than or equal to 10 and the pK_{b} of the base is less than or equal to 11.

7. Process according to any of Claims 1 to 6, **characterized in that** the depolymerization agent is selected from the group consisting of hydrogen chloride, aqueous hydrochloric acid, hydrogen bromide, sulfuric acid, sulfurous acid, silicic acid, aqua regia, peroxoacids, chlorosulfonic acid, nitric acid, nitrous acid, phosphoric acid, phosphonic acid, phosphinic acid, formic acid, acetic acid, chloroacetic acid, citric acid, benzoic acid, glacial acetic acid, organic anhydrides in the presence of H₂O, Lewis acids, Lewis bases, inorganic or organic bases, ammonia, alkali metal hydroxide, alkaline earth metal hydroxide, alkali metal oxides, alkaline earth metal oxides, organometallic bases, metal alcoholates, metal-hydrocarbon bases having from 1 to 20 carbon atoms, butyllithium, metal carboxylates, mixtures comprising at least two of the abovementioned acids and mixtures comprising at least two of the abovementioned bases.

8. Process according to any of Claims 1 to 7, **characterized in that** on that surface of the release coating that faces away from the carrier material a defined macrostructure in relation to the position of the depressions and/or a defined microstructure in relation to the three-dimensional geometry (3D) and/or to the respective interior surface of the depressions is produced.

## Revendications

1. Procédé de fabrication d'un revêtement antiadhésif appliqué sur un matériau support, comprenant :
(i) la préparation d'un matériau support qui comprend au moins d'un côté un revêtement de silicone réticulée en tant que revêtement antiadhésif,
(ii) l'application d'un agent de dépolymérisation sur la surface opposée au matériau support du revêtement antiadhésif, de manière à obtenir au moins un creux dans la surface par dépolymérisation locale des silicones, et
(iii) l'élimination de l'agent de dépolymérisation et des polyorganosiloxanes dépolymérisés après la dépolymérisation.

2. Procédé selon la revendication 1, **caractérisé en ce que** les silicones sont des polyorganosiloxanes réticulés par addition.

3. Procédé selon l'une quelconque des revendications 1 et 2, **caractérisé en ce que** les agents de dépolymérisation et les polyorganosiloxanes dépolymérisés sont éliminés avec un solvant.

4. Procédé selon l'une quelconque des revendications 1 à 3, **caractérisé en ce que** les agents de dépolymérisation sont appliqués par des procédés d'impression, au pinceau, par tamponnage, par diffusion, par tamisage, par atomisation, par pulvérisation, par injection, par scarification ou par gravure.

5. Procédé selon l'une quelconque des revendications 1 à 4, **caractérisé en ce qu'**au moins un acide ou une base est utilisé en tant qu'agent de dépolymérisation.

6. Procédé selon la revendication 5, **caractérisé en ce que** l'acide présente une valeur de pKₛ inférieure ou égale à 10 et la base présente une valeur de pK_{b} inférieure ou égale à 11.

7. Procédé selon l'une quelconque des revendications 1 à 6, **caractérisé en ce que** l'agent de dépolymérisation est choisi dans le groupe constitué par le chlorure d'hydrogène, l'acide chlorhydrique aqueux, le bromure d'hydrogène, l'acide sulfurique, l'acide sulfureux, la silice, l'eau régale, les peroxoacides, l'acide chlorosulfonique, l'acide nitrique, l'acide nitreux, l'acide phosphorique, l'acide phosphonique, l'acide phosphinique, l'acide formique, l'acide acétique, l'acide chloroacétique, l'acide citrique, l'acide benzoïque, l'acide acétique glacial, les anhydrides organiques en présence d'H₂O, les acides de Lewis, les bases de Lewis, les bases inorganiques ou organiques, l'ammoniac, les hydroxydes alcalins, les hydroxydes alcalino-terreux, les oxydes alcalins, les oxydes alcalino-terreux, les bases métallo-organiques, les alcoolates de métaux, les bases d'hydrocarbures de métaux contenant 1 à 20 atomes C, le butyl-lithium, les carboxylates de métaux, les mélanges contenant au moins deux des acides susmentionnés et les mélanges contenant au moins deux des bases susmentionnées.

8. Procédé selon l'une quelconque des revendications 1 à 7, **caractérisé en ce qu'**une macrostructure définie au regard de la position des creux et/ou une microstructure définie au regard de la géométrie tridimensionnelle (3D) et/ou de la surface intérieure respective des creux sont formées sur la surface opposée au matériau support du revêtement antiadhésif.
